# EUROPEAN PATENT APPLICATION

(11) **EP 4 793 377 A1**
(43) Date of publication of application: **19.08.2026**
(21) Application number: 25158268.0
(22) Date of filing: 17.02.2025
(51) Int. Cl.: C22C 32/00, B22F 3/105, B23K 11/30, B23K 35/02, B23K 35/22, B23K 35/32, B23K 35/40, C22C 1/04, C22C 1/059, C22C 9/00, C22C 27/04

(54) **METAL MATRIX COMPOSITE MATERIALS AND METHODS OF MANUFACTURING THEREOF**

(71) Applicant: EPoS Technologies SA, 1690 Villaz-St-Pierre (CH)
(72) Inventor: FAIS, Alessandro, 1690 Villaz-St-Pierre (CH); RECALCATI, Sébastien, 1690 Villaz-St-Pierre (CH); ZELLER, Andreas, 1690 Villaz-St-Pierre (CH)
(74) Representative: Buzzi, Notaro & Antonielli d'Oulx S.p.A.

(57) **Abstract**

Disclosed herein is a novel metal matrix composite material comprising copper in a volume percentage amount from 1% to 65% of the volume of the composite material, titanium nitride in a volume percentage amount from 1% to 25% of the volume of the composite material, and the balance molybdenum. The disclosure also concerns a method of manufacturing of the metal matrix composite material disclosed herein.

## Description

### Field of the invention

The present invention relates to metal matrix composite materials, particularly manufactured by sintering.

### Prior art

Molybdenum copper composites are a known family of metal-metal composites, similar to tungsten-copper composites, widely used as electrical conductors in welding applications and thermal management solutions for semiconductors due to their good combination of high thermal conduction and low thermal expansion which allows for an optimal mechano-thermal coupling with semi-conductors in electronics. As resistance welding electrodes they are known for their good compromise between toughness, machinability, electric conductivity and hardness together with a low tendency to stick. They are typically manufactured through a two-step process in which the powders of the refractory metal (molybdenum or tungsten) are pressed and sintered or hot-pressed to create an open-pore structure or scaffold. In a second step copper is pressure-infiltrated as a liquid through (and inside) the open-pore structure or scaffold.

Another method of manufacturing Copper-Molybdenum composites is suggested by US 7,122,069 B2 which proposes to create an adequate powder of Copper and Molybdenum via the reduction of CuMo-based composite oxides which are reduced in hydrogen and ready for press and sinter via liquid phase sintering.

Yet another, more advanced, method is proposed in US 10,837,087 B2, wherein a molybdenum- or tungsten-based scaffold is infiltrated with copper. The base molybdenum or tungsten scaffold is reinforced with one of B (boron), N (nitrogen) or C (carbon) to increase its hardness. In one embodiment therein, the resulting material is disclosed as including, in the molybdenum- or tungsten-based scaffold, one of the following: "silicon (Si), silver (Ag), cobalt (Co), chromium (Cr), iron (Fe), manganese (Mn), niobium (Nb), nickel (Ni), phosphorus (P), sulfur (S), tantalum (Ta), titanium (Ti), vanadium (V), and zirconium (Zr), wherein the at least one of B, N, and C and the at least one additional additive together are present in a total amount of up to 25 wt.%, based on the total weight of the material. The addition elements with a small atomic radius such as B, N or C, which tend to form ceramic hard phases with molybdenum, has the specific intent of reinforcing the base molybdenum powder.

The microstructure and the phases disclosed in such document have important limitations, though. Molybdenum carbides, nitrides and borides are not as effective in reducing sticking and friction as other ceramic phases. The distribution of the refractory phase (the scaffold) compared to the copper phase is a consequence of the need for liquid copper to infiltrate the scaffold properly so that the molybdenum powder compacts during the liquid-phase sintering process, so it must have an open porosity with values of porosity from 10 to 50%. These types of microstructures do not optimize the mechanical properties at high temperature, and are merely an inevitable consequence of the manufacturing method used.

A further drawback is related to the use of tungsten for the refractory phase, which is known for higher costs, lower toughness, lower machinability and lower availability as compared to other metals for the refractory phase

### Object of the invention

The object of the invention is to solve the aforementioned technical problems. More in detail, the object of the invention is that of providing a molybdenum-copper metal matrix composite material, particularly for use as an electrode tip for a welding electrode, with enhanced high temperature hardness, enhanced machinability and very low reactivity with the materials to be welded, namely having very low stickiness. A further object of the invention is to reduce the welding energy involved during welding when using an electrode tip made of the molybdenum-copper metal matrix composite material. Yet a further object of the invention is that of allowing manufacturing involving materials more widely available than tungsten.

### Summary

The object of the invention is achieved by a metal matrix composite material, a manufacturing method and a welding electrode having the features set forth in the claims that follow, which form an integral part of the technical disclosure provided herein in relation to the invention.

### Brief description of the figures

Further features and advantages of the invention will become apparent from the following description with reference to the annexed figures, provided purely by way of non-limiting example, wherein:
- figure 1 is an optical micrography of a mixture of constituents in particle form used in a manufacturing method according to the invention,
- figure 2 is an optical micrography of a Grade 1 material according to the invention,
- figure 3 is a magnified view of figure 2,
- figure 4 and figure 5 are XRD (X-Ray Diffraction) plots for Grade 0 and Grade 1 materials according to the invention,
- figures 6 and 7 are images of a welding electrode tip made of a material according to the invention, and
- figures 8, 9 are stickiness test plots of welding electrode tips made of materials according to the invention, and
- figure 10, 11 are images of electrode tip material and electrodes for resistance welding according to an embodiment of the invention.

### Detailed description

Disclosed herein is a metal matrix composite material according to embodiments of the invention comprising copper (Cu) in a volume percentage amount from 1% to 65% of the volume of the composite material, titanium nitride (TiN) in a volume percentage amount from 1% to 25% of the volume of the composite material, and the balance molybdenum (Mo), the balance being such as to reach 100% volume of the composite material.

More in detail, the volume fraction *f*_{*v*,*i*} of each i-th phase - i.e. each of copper, titanium nitride, and molybdenum (i = 1, 2, 3 herein) - is determined as *f_{v,i}* = $\frac{{v}_{i}}{{\sum }_{i = 1}^{3} {v}_{i}}$ wherein *vᵢ* is the volume of the i-th phase and ${\sum }_{i = 1}^{3} {v}_{i}$ is the volume of all the phases together (copper, titanium nitride, and molybdenum).

To determine how much powders to weight in order to prepare the composite material, the starting point is the definition of density as: δᵢ=v_{i/}mᵢ were δ is the density in units of g/m³ or more frequently g/cm³ from which the value m, the amount of powder in weight, can be calculated.

The density of the composite material (δ_{c}), since there is little or no chemical interaction to form other phases, results from the application of the law of phases to the powders, namely: ${δ}_{c} = {\sum }_{i = 1}^{3} {f}_{v , i} ⋅ {δ}_{i}$. This value is used to evaluate the residual porosity in the materials produced.

By way of example, the compositions of two notable grades (1 and 2) of the material according to the invention are displayed in the tables below (both in weight and volume percentages of the total weight and volume, respectively, of the material).

**Table 1 - weight percentages of Grade 1 and Grade 2 materials according to the invention. The higher the grade, the lesser the copper amount (% vol).**

| **Grade** | **%wt Mo** | **%wt TiN** | **%wt Cu** |
|---|---|---|---|
| Grade 1 | 26.73 | 16.22 | 57.06 |
| Grade 2 | 92.75 | 2.73 | 4.53 |

**Table 2 - volume percentages of Grade 1 and Grade 2 materials according to the invention, further including physical properties such as IACS (International Annealed Copper Standard) electrical conductivity, and**

| **Grade** | **%vol Mo** | **%vol TiN** | **%vol Cu** | **IACS [%]** | **HV₁** |
|---|---|---|---|---|---|
| Grade 1 | 21.90 | 24.91 | 53.20 | 11 | 310 |
| Grade 2 | 90.00 | 5.00 | 5.00 | 18.5 | 380 |

### Vickers hardness HV₁

A material according to the invention is particularly effective when used to manufacture a resistance welding electrode tip, specifically by the method disclosed in the following.

The microstructure and composition of the metal matrix composite material according to the invention achieves a very high machinability and low stickiness together with high mechanical properties at high temperatures. It is manufactured through mechanical alloying starting from a very fine mechanical mix of titanium nitride (TiN), molybdenum (Mo) and copper (Cu). It is defined, accordingly, a method of manufacturing the above metal matrix composite material which comprises:
- providing copper (Cu) in particle form, i.e. as a powder,
- providing titanium nitride in particle form, i.e. as a powder,
- providing molybdenum in particle form, i.e. as a powder,
- milling at least said titanium nitride in particle form and said molybdenum in particle form
- consolidating a mixture of copper in particle form, titanium nitride in particle form, and molybdenum in particle form following said milling into the metal matrix composite material by way of field-assisted sintering.

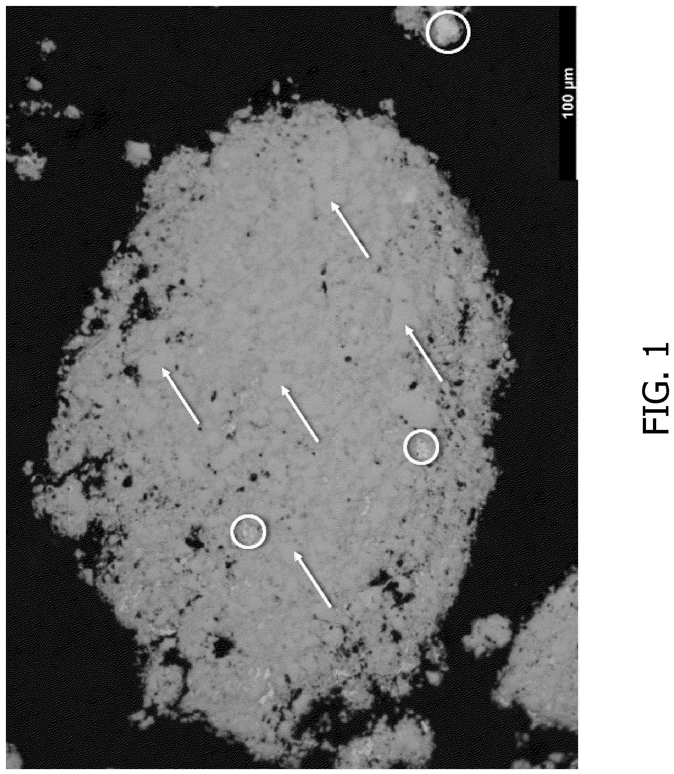

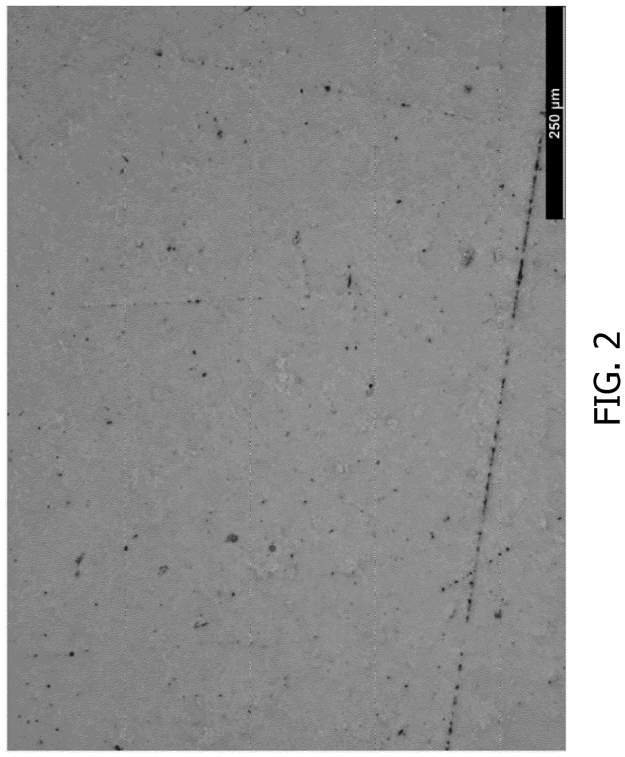

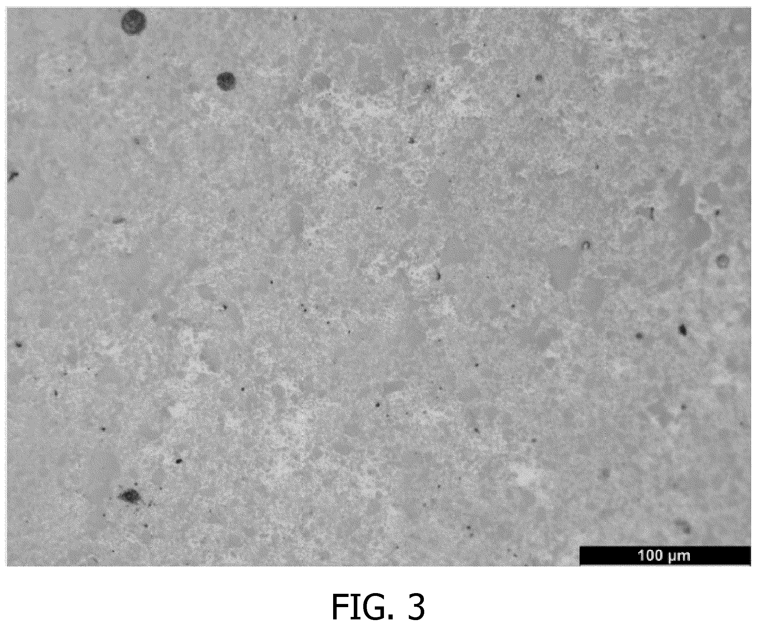

In view of the foregoing, and with reference to Figure 1, according to an advantageous aspect of the invention the ceramic phase (TiN) is preferably intimately mixed with Molybdenum and so well dispersed that, with optical microscopy, they constitute a single metallurgical phase. Figure 1 in particular shows the aggregation of TiN and Molybdenum before consolidation by sintering, but after preparation of the mixture of Copper, Titanium Nitride, and Molybdenum. White circles denote copper islands surrounded by what looks like a single phase (white arrows), but it is in fact a mechanical mixture of TiN and molybdenum. Figure 2 shows the microstructure of the consolidated (sintered) metal matrix composite material of the invention, which essentially consists of a barely visible copper binder surrounding the Mo-TiN composite. The intimate mechanical alloying with copper of the Mo-TiN phase is such that copper is only distinguishable at high enlargements and coats evenly the Mo-TiN particles as shown in the magnified view of figure 3.

The TiN phase shall remain intact during the manufacturing of the composite powder (Mo+TiN in particle form, then milled) and during the consolidation process. To this end, according to one aspect of the invention titanium nitride in particle form has a particle size of 10 µm or less, preferably 5 µm or less, more preferably 3 µm or less. In general, the smaller the size of the TiN particles when in powdered form, the better. However, it is more challenging to keep TiN particles intact through the densification process without diffusion of molybdenum and degradation to molybdenum nitride, which is not desirable according to the invention.

As regards the milling step, it may be done involving all constituents (Cu, Mo, TiN) together regardless of the copper amount, which is in general a preferred option, or in two subsequent stages depending on the copper amount.

In embodiments wherein the milling step involves subsequent stages based on the copper amount, when copper is present in low to mid amounts (purely by way of example, when copper is present below 50% in volume), the milling step includes milling copper in particle form together with and at the same time as titanium nitride in particle form and molybdenum in particle form. When, on the other hand, copper is present in high amounts (purely by way of example, when copper is present above 50% and up to 65% in volume) the milling step comprises:
- a first milling of titanium nitride in particle form and molybdenum in particle form, and
- a second milling of copper in particle form with milled titanium nitride in particle form and molybdenum in particle form from the first milling, i.e. copper is milled with a pre-milled mixture of TiN and Molybdenum.

Milling is preferably provided by attritor mill(s) or planetary ball mill(s).

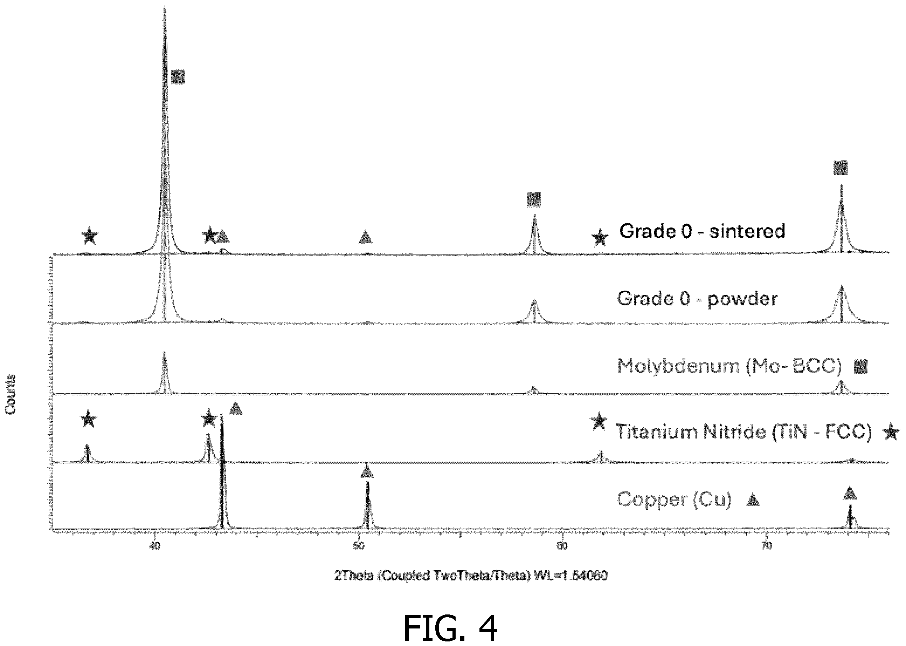

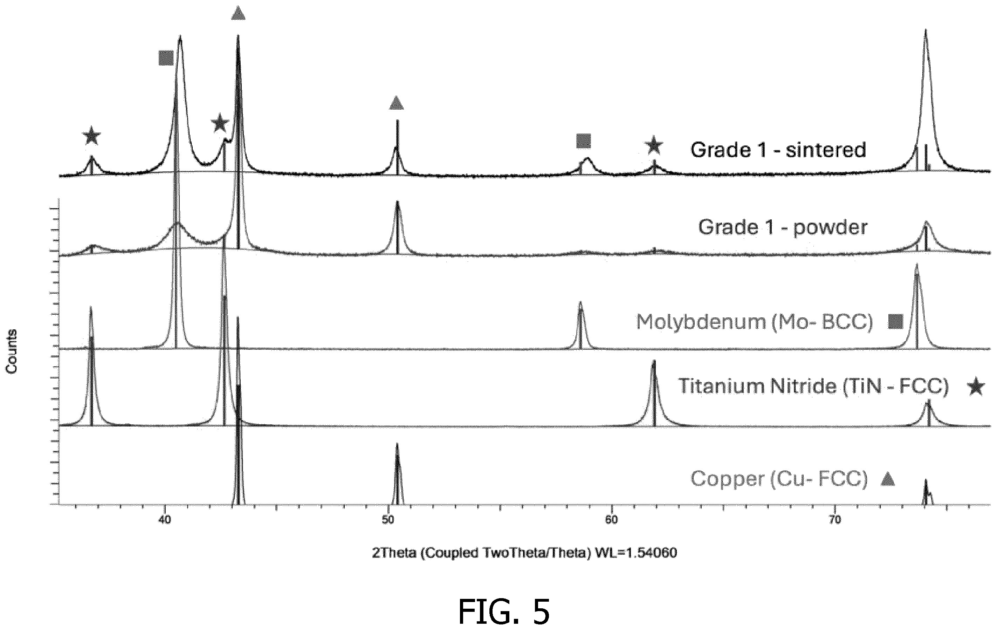

As visible in the X-Ray Diffraction (XRD) spectra of figures 4 and 5, each grade-specific as regards the material of the invention (Grade 0 for figure 4, Grade 1 for figure 5) no other phases besides Molybdenum, Titanium Nitride and Copper are present, neither with reference to the constituents in particle form prior to milling and consolidation, nor with reference to the consolidated material. More in detail, in preferred embodiments of the invention the only phases making upthe material consist of face-centered cubic (FCC) copper, face-centered cubic (FCC) titanium nitride, and body-centered cubic (BCC) molybdenum, so that the list of constituents and ranges disclosed in the foregoing is to be understood - in such embodiments - as consisting of copper as face-centered cubic copper, titanium nitride as face-centered cubic titanium nitride, and molybdenum as body-centered cubic molybdenum. FCC copper is associated to a triangle-shaped marker in figures 4 and 5, FCC titanium nitride to a star-shaped marker, while BCC molybdenum to a square marker. Figures 4, 5 feature five individual plots (spectra), specifically:
i) Grade 0/1 - sintered: XRD spectrum of consolidated Grade 0/1 material
ii) Grade 0/1 - powder: XRD spectrum of powder Grade 0/1 material, i.e. with the constituents thereof in particle form prior to consolidation
iii) BCC Molybdenum XRD spectrum (Molybdenum (MO-BCC))
iv) FCC TiN XRD spectrum (Titanium Nitride (TiN-FCC))
v) FCC Copper XRD spectrum (Copper (Cu))

During consolidation, care shall be taken as regards the combination of time/temperature/energy to avoid resulting in long range diffusion which would transform the titanium nitride particles into a core-shell ceramic with molybdenum nitride on the outer layer and titanium nitride in the inner layer or would induce a complete dissolution of molybdenum into the titanium nitride creating complex carbides, both effects being clearly undesirable in view of the foregoing.

The effect of the TiN particles in the composite material of the invention may be regarded as threefold:
i) it increases the high temperature hardness by reducing plastic deformation,
ii) it increases hardness retention after exposure to high temperature, and
iii) it reduces the tendency to stick or weld to the material to be welded (reduction of sticking).

The effect of copper is, on the other hand, that of increasing the electrical conductivity of the composite material, as well as that of mechanically cementing the Mo-TiN composite, thereby granting a higher toughness, strength, and a better machinability.

By tuning the quantity of such phases (TiN, Mo, Cu) it is possible to design the electrical (and thereby thermal) conductivity of the material to better fit the intended welding application - in view of the use as a welding electrode tip material.

In general, the highest possible amounts of TiN are advantageous in decreasing the tendency to stick/adhere during welding but on the other hand they reduce the electrical conductivity, as TiN is a semi-conductor. Additionally, they sensibly reduce toughness and the machinability of the material. An important advantage, especially of material grades with a higher percentage of copper is the possibility to have both high temperature mechanical resistance, machinability and a relatively low cost, having a high-volume percentage of copper.

As regards consolidation, any fast field assisted sintering method may be used in the manufacturing method of the invention. Electro-Sinter-Forging (ESF) is a preferred choice in this respect. Fast field assisted sintering methods such as ESF or capacitor-discharge sintering have the advantage of avoiding contamination of the consolidated material, and inhibiting long range diffusion (and accordingly inhibiting the undesired effects referred to above in conjunction with long range diffusion).

More specifically, a preferred option is any field-assisted sintering method with a thermal cycle (heating, maintenance, and cooling) duration of 30 seconds or less, preferably 20 seconds or less, more preferably 10 seconds or less.

In view of the above, in a preferred embodiment of the method of the invention the following is envisaged:
a) milling at least said titanium nitride in particle form and said molybdenum in particle form is carried out - regardless of whether in a single stage in two stages based on copper concentrations, as disclosed in the foregoing - in an inert environment, such as argon, but also with the addition of small amounts of hydrogen (< 4% in volume) that help de-oxidizing and eliminating any residual oxygen present in the milling atmosphere. Nitrogen, although relatively stable, cannot be used as a protective gas as it tends to bond, during the milling process, with Molybdenum, thereby changing the tendency of the powders to consolidate and profoundly changing both the microstructural and the chemical characteristics of the starting powders. Milling is then performed in a high energy system to prepare a very fine and homogeneous composite and involving, as said, a planetary ball mill or an attritor mill.

A preferred output of the method of the invention involves consolidating the mixture (output of the milling step) into a cylindrical body, particularly a cylindrical electrode tip.

In view of the intended use as a welding electrode tip, the above involves further machining operations to achieve a desired/required shape for the electrode tip. Further details are provided in the detailed description of Examples #1 to #3 that follows.

### Example #1

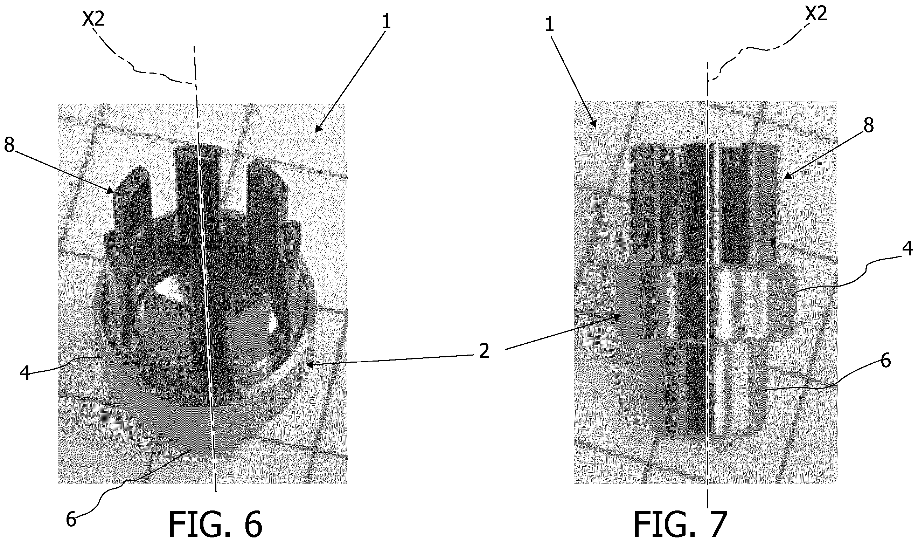

In one embodiment, with reference to figures 6 and 7, this includes machining the cylindrical body to achieve a castellated shape at one end thereof. Reference number 1 in figures 6 and 7 denotes a welding electrode tip configured for welding collectors of electrical motors. The electrode 1 includes a cylindrical body 2 (generally hollow) with a longitudinal axis X2 and comprising an intermediate portion 4 and first and second end portions 6, 8. The intermediate portion 4 has a larger outer diameter than the end portions 6, 8 and is arranged between the latter. The first end portions is slightly conical in shape to fit into the socket of a standard welding electrode body, whilst the second end portion 8 has a castellated geometry comprising a circular arrangement of axial, finger-like and evenly spaced, protrusions 10, the distal end of which provides the welding surface. Such a shape is also commonly referred to as "multi-pin" shape.

Unlike prior art electrode tips, i.e. electrode made of materials discussed at the beginning of the present disclosure, which have the same shape however achieved by brazing the finger like protrusions 10 to the intermediate portion 4, the electrode tip 1 made of the material according to the invention is machined from billet, i.e. it is machined starting from the cylindrical body which is the output of the consolidation by field-assisted sintering. This comes with much higher reliability and lower manufacturing costs. A typical use involves brazing 96.5% Sn - 3.5% Ag coated copper wires onto 97% Ag - 3% Cu collectors for electric motors. When made of Grade 1 material according to the invention, such an electrode tip has a higher resistivity which helps in heating the solder material, thereby allowing to reduce the energy consumption during soldering by 13% (from 4.8 kW/h to 4.2 kW/h) as compared to the prior art brazed (tungsten) solution.

In greater detail, the prior art manufacturing method (and material) to achieve the electrode shape of figures 6 and 7 involves silver-brazing seven thin electrodes made of tungsten or tungsten-copper onto a machined copper bushing 10 mm in diameter working as an electrode holder.

By using the material of the invention (Example #1), a 10 mm (diameter) by 12 mm (height) cylindrical body with Grade 1 compositions per tables 1 and 2 is manufactured with the following steps:
- 8.02 g of 240 mesh Molybdenum powders and 4.86 g Titanium Nitride in particle form (powders) with a particle size distribution between 1 and 2 µm are inserted into a steel jar of a planetary ball mill with steel ball and a ball to powder ratio of 46.5:1. The jar is emptied of the air and filled with Argon;
- the powders are milled with 24 cycles, each cycle consisting of 15 minutes of milling and 15 off to cool. After each cycle the direction of rotation is reversed. The total milling time is 12 hours, with 6 hours of effective milling. No other milling media or milling aid is added. Milling speed (rotational): 350 rpm;
- at the end of milling, 17.12 g of copper powders are added inside the jar. Ball to powder ratio is adjusted to 20:1 and the milling is carried on in Argon atmosphere at 200 RPM for 180 cycles, 1 minute on and 1 minute off for a total time of 6 hours. The use and presence of nitrogen or oxygen during the milling both degrade the mechanical and electrical properties and densify the material. The resulting composite powder is then kept and stored under inert atmosphere such as Argon or Nitrogen (which can be used for storage purpose but not for the milling stage). Note that the amounts described and the method details are merely exemplary, as many different milling technologies and routes can be resorted to. The result is consistently that of a relatively coarse, flowable, composite powder made of FCC copper, BCC molybdenum and FCC titanium nitride. The composite material will have a density of 8.225 g/cc.
- to manufacture a 10 mm (diameter) by 12 mm (height) cylinders, the ceramic die of an electro-sinter-forging machine is loaded with 7.752 g of composite powder prepared per the above. The powders are consolidated using an energy of approximately 7.8 kJ (SEI, Specific Energy Input of 1 kJ/g), a peak current of 44.9 kA and peak voltage of 22.2 V, with a starting pressure of 55 MPa and a peak pressure of 290 MPa, in less than ten seconds. The consolidated cylindrical body is automatically ejected from the die with the lower punch (fixed matrix configuration). The cylinder is then machined with a conventional mill to the geometry of Figures 6 and 7.

### Example #2

In another embodiment, this comprises machining the cylindrical body to achieve a blunt or rounded shape at one end thereof, this being particularly required in view of a use as a brass welding electrode. More in detail, such blunt or rounded shape is such as to confer an ogee-like shape to the machined cylindrical body.

Preferably, an electrode for spot welding yellow brass sheets 0.5 mm thick, is manufactured in Grade 1 material according to the invention. The material preparation is identical to that described in Example #1. Further machining operations are required for the electrode tip to fit into a standard ISO welding tip, but this is conventional art.

A medium frequency welding apparatus was used while measuring current and voltage to evaluate the efficiency of the weld. The currents are delivered for a specific weld time, which is one of the welding machine parameters. Table 3 below is exemplary of weld current-weld time pairs experimentally recorded (I = current, t = time):

**Table 3 - weld current-weld time pairs in Example #2**

| | | | | | | | | | | | |
|---|---|---|---|---|---|---|---|---|---|---|---|
| I | [kA ] | 8.1 | 9.8 | 10. 7 | 12. 4 | 12. 9 | 13. 7 | 14. 5 | 15. 3 | 16. 1 | 17. 0 |
| t | [ms ] | 42. 1 | 43. 0 | 43. 5 | 44. 3 | 44. 6 | 45. 0 | 45. 4 | 45. 7 | 46. 0 | 46. 2 |

Valid welds began from 12.4 kA up to 16 kA. At 17 kA the brass sheet material turned liquid and was ejected away from the welding area. Despite the ejection the welding tip had no damage and no attachment to the material being welded showing robustness and durability in the application for the welding of brass. Stickiness of the sheets to the tips was evaluated by operators using a semi-subjective evaluation, the description of which is in Table 4 below.

**Table 4 - Perceived Stickiness Rating**

| RATING | DESCRIPTION |
|---|---|
| 0 | No sticking |
| 0.2 | Very little sticking, very easy to detach with a finger (light touch of the sheet metal with operator's finger) |
| 0.5 | Little sticking, can be detached with a finger (two-finger grip and very little effort) |
| 1 | Sticking, easy to detach by hand (two-finger grip and little effort) |
| 1.5 | Adhesion, can be detached by hand with a little force (two finger grip and medium force) |
| 2 | Adhesion, can be detached by hand with a high amount of force (two finger grips and very high force) |
| 3 | Significant adhesion, only with great effort and can no detachment by hand (only with tools, e.g. water pump pliers) |
| 4 | Welding bond between electrode and material |

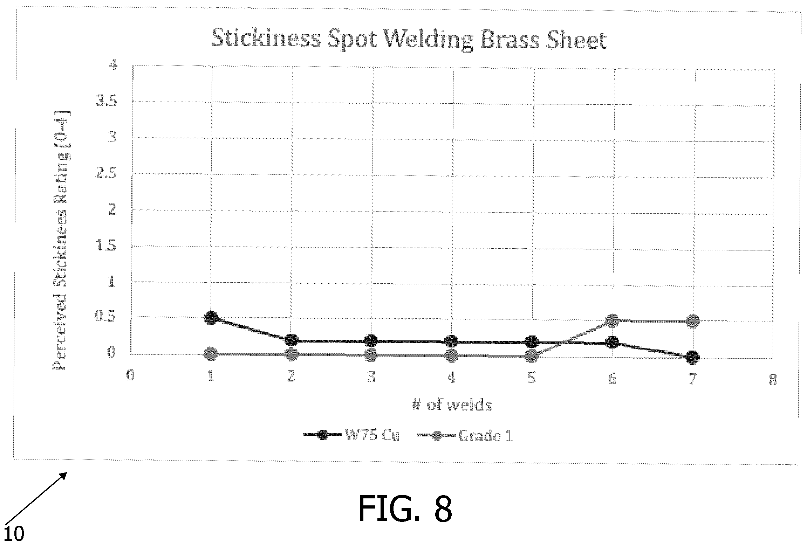

Values higher than 3 are considered unacceptable because of the forces necessary to detach the sheets form the tips. Values from 1.5 to 3 are barely acceptable. Values below 1.5 are acceptable. Figure 8 shows values of Perceived Stickiness Rating of Grade 1 electrode tips compared to commercial welding electrode material Cu-W 25-75 and as a function of the number of subsequent welds (# of welds). The material of the invention behaves better or equal to Cu-W, while also dispensing with the use of tungsten.

### Example #3

An electrode for spot welding of copper sheets 0.5 mm thick, is manufactured in Grade 1 material according to the invention, Grade 0 material according to the invention, Tungsten, Molybdenum and Tungsten-Copper 75-25. The material preparation for Grade 1 and Grade 0 is identical to that described in Example #1. The tested Tungsten and Tungsten Copper are commercial material, machined and mounted like new materials onto standard welding electrodes.

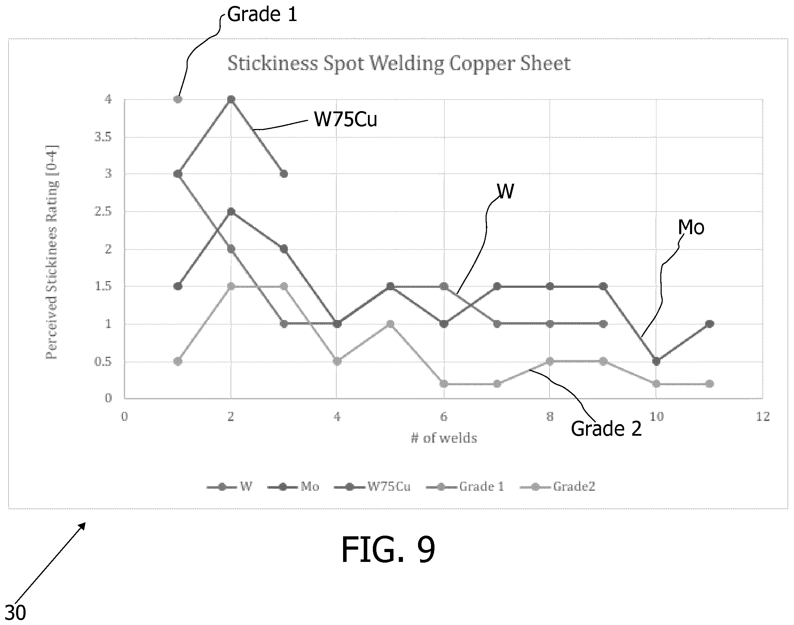

The stickiness is evaluated according to the same criteria as Example 2, and figure 9 shows the behaviour of the four tested materials. The plot in figure 9 is again of the Perceived Stickiness Rating-# of welds type.

In more detail, Grade 1 material according to the invention and W-Cu stop working after very few welds due to the excessive stickiness. Tungsten and Molybdenum are considered state of the art for this application. Grade 2 material according to the invention performed better than Tungsten and Molybdenum. The average values of perceived stickiness were 1.44±0.68, 1.41±0.54 and 0.58±0.49 for Tungsten, Molybdenum and Grade 2, showing for the material according to the invention, a sensibly lower tendency to stick and a more homogenous behaviour (from lower standard deviation) than known proven solutions.

### Example #4

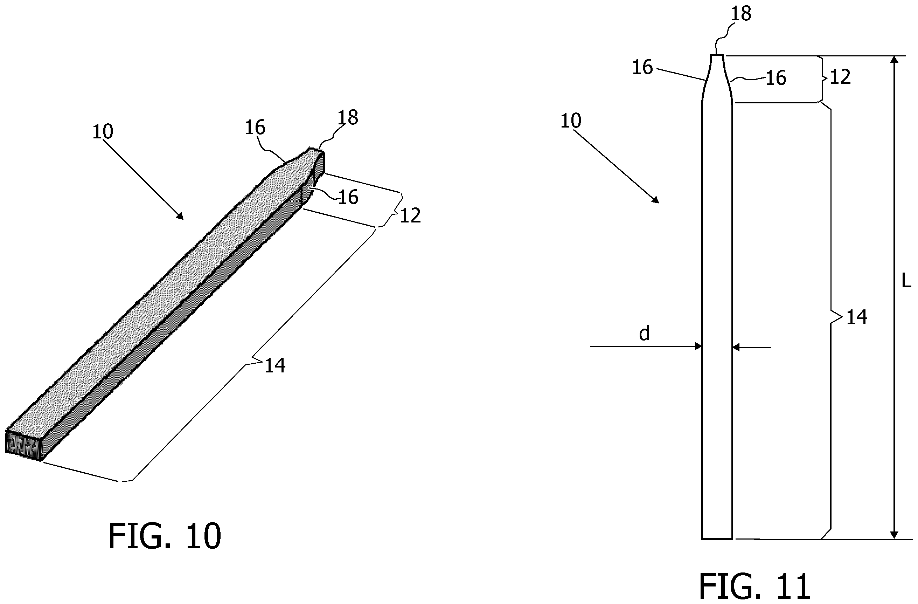

With reference to figures 10 and 11, an electrode tip 10 for spot welding of copper sheets 0.5 mm thick, is manufactured in Grade 1 material according to the invention. The electrode tip 10 comprises an electrode tip body including a nose portion 12 and a buffer portion 14, wherein the nose portion is essentially a former buffer portion machined into a tapered shape comprising two tapered side walls 16 (in the figures shown as tapering according to a non-linear profile) converging to a tip surface 18 which is intended to make contact with a respective copper sheet to be welded. The electrode tip body of the electrode tip 10 is polygonal in cross section (for instance rectangular as per the figures, or square), with the cross section getting progressively smaller from the buffer portion 14 to the tip surface 18.

The electrode tip 10 lends itself to multiple dressings intended to restore the shape of the tip portion 12 while progressively eroding the material of the buffer portion 14 which becomes shorter as the tip dress count goes by**.**

With reference to figure 11, the electrode tip body of the electrode tip 10 has an aspect ratio L/d wherein L is a length of the electrode tip body and d is a dimension transverse to the length L (d can be any transverse dimension to L, regardless of the dimension specifically annotated in figure 11) comprised between 1 and 50 (endpoints included), more preferably comprised between 10 and 27 (endpoints included).

The material preparation for Grade 1 is identical to that described in Example #1. The powders are inserted into a properly designed die with a cavity rectangular in cross section which measures 80x3 mm. The final shape and size of the electrode is a rectangular cross section with dimensions 80x5x3 mm.

Long shapes - or shapes with a high aspect ratio (length/transverse dimension) - of refractory materials such as W, Mo and the like, are conventionally manufactured via pressing, sintering and extrusion or extrusion of green and sintering in traditional thermal ovens or hot isostatic presses. Shapes with a high aspect ratio such as these, cannot be easily manufactured with field assisted sintering techniques whereby the only way to manufacture oblong shapes is to use rectangular or square cross sections and to densify/press the parts along one of the 80 mm x 5 mm or 80 mm x 3 mm dimension (in the embodiment of figures 10, 11, which is 80 mm long and rectangular in cross section with dimensions 3 mm x 5 mm). In the embodiments the die cavity is an 80 mm x 3 mm thereby the electrode 10 is densified along the 5 mm direction.

Naturally, while the principle of the invention remains the same, the details of construction and the embodiments may widely vary with respect to what has been described and illustrated purely by way of example, without departing from the scope of the present invention.

## Claims

1. A metal matrix composite material comprising copper in a volume percentage amount from 1% to 65% of the volume of the composite material, titanium nitride in a volume percentage amount from 1% to 25% of the volume of the composite material, and the balance molybdenum.

2. The metal matrix composite material of Claim 1, wherein copper consists of face-centered cubic copper, titanium nitride consists of face-centered cubic titanium nitride, and molybdenum as body-centered cubic molybdenum.

3. The metal matrix composite material of any of the above claims, wherein titanium nitride has a particle size of 10 µm or less, preferably 5 µm or less, more preferably 3 µm or less.

4. A method of manufacturing a metal matrix composite material according to any of claims 1 to 3, the method comprising:
- providing copper in particle form
- providing titanium nitride in particle form
- providing molybdenum in particle form
- milling at least said titanium nitride in particle form and said molybdenum in particle form,
- consolidating a mixture of copper in particle form, titanium nitride in particle form, and molybdenum in particle form after said milling into the metal matrix composite material by way of field-assisted sintering.

5. The method of Claim 4, wherein said milling at least said titanium nitride in particle form and said molybdenum in particle form further includes milling said copper in particle form together with and at the same time as said titanium nitride in particle form and said molybdenum in particle form.

6. The method of Claim 4, wherein said milling at least said titanium nitride in particle form and said molybdenum in particle form comprises:
- a first milling of said titanium nitride in particle form and said molybdenum in particle form
- a second milling of said copper in particle form with milled titanium nitride in particle form and said molybdenum in particle form from the first milling.

7. The method of any of claims 4 to 6, wherein said field-assisted sintering comprises electro-sinter-forging.

8. The method of any of claims 4 to 7, wherein said field-assisted sintering has a thermal cycle duration of 30 seconds or less, preferably 20 seconds or less, more preferably 10 seconds or less.

9. The method of claim 8, wherein said thermal cycle comprises heating, maintenance, and cooling.

10. The method of any of claims 4 to 9, wherein said - consolidating the mixture of copper in particle form, titanium nitride in particle form, and molybdenum in particle form following said milling into the metal matrix composite material by way of field-assisted sintering comprises consolidating the mixture into a cylindrical body, particularly a cylindrical electrode tip.

11. The method of Claim 10, further comprising machining the cylindrical body to achieve a blunt or rounded shape at one end thereof.

12. The method of Claim 10, further including machining the cylindrical body to achieve a castellated shape at one end thereof.

13. The method of any of Claims 4 to 6, wherein said milling at least said titanium nitride in particle form and said molybdenum in particle form comprises adding argon or helium in the milling environment, and optionally up to 4% in volume of hydrogen.

14. A welding electrode tip made of a metal matrix composite material according to any of claims 1 to 3, the electrode tip being one of:
- a cylindrical electrode tip including a blunt or rounded shape at one end thereof,
- an electrode tip (10) including an electrode tip body with a polygonal section including a nose portion (12) and a buffer portion (14), the buffer portion (14) being machinable to a tapered shape to provide the nose portion (12),
- a cylindrical hollow electrode tip including a castellated shape at one end thereof

15. The welding electrode tip according to Claim 14, wherein the electrode tip body with a polygonal section has an aspect ratio L/d wherein L is a length of the electrode tip body and d is a dimension transverse to the length comprised between 1 and 50, preferably between 10 and 27.
